# EUROPÄISCHE PATENTSCHRIFT

(11) **EP 0 986 595 B1**
(45) Veröffentlichungstag und Bekanntmachung des Hinweises auf die Patenterteilung: **17.04.2002**
(21) Anmeldenummer: 98929411.1
(22) Anmeldetag: 02.06.1998
(51) Int. Cl.: C08G 18/40, C09D 175/04, C08K 5/00, C08K 5/3472, C08K 5/3435

(54) **BESCHICHTUNGSMITTEL, VERFAHREN ZU SEINER HERSTELLUNG UND SEINE VERWENDUNG ALS DECKLACK ODER KLARLACK, INSBESONDERE ZUR BESCHICHTUNG VON KUNSTSTOFFEN**
COATING AGENT, METHOD FOR ITS PRODUCTION AND ITS USE AS COATING LACQUER OR TRANSPARENT LACQUER, IN PARTICULAR FOR COATING PLASTICS
AGENT DE REVETEMENT, SON PROCEDE DE FABRICATION ET SON UTILISATION COMME VERNIS DE SURFACE OU VERNIS CLAIR, EN PARTICULIER POUR LE REVETEMENT DE MATIERES PLASTIQUES

(30) Priorität: 05.06.1997 DE 19723504
(43) Veröffentlichungstag der Anmeldung: 22.03.2000
(73) Patentinhaber: BASF Coatings AG, 48165 Münster (DE)
(72) Erfinder: HINTZE-BRÜNING, Horst, D-48165 Münster (DE); VAN ENDE, Patrick, NL-4611 JX Bergen op Zoom (NL)
(74) Vertreter: Fitzner, Uwe, Dr.
(86) Internationale Anmeldenummer: EP9803285
(87) Internationale Veröffentlichungsnummer: WO9855526

(56) Entgegenhaltungen:
- EP-A- 0 518 779
- DE-A- 3 109 604
- US-A- 5 145 893
- US-A- 5 504 178

## Beschreibung

Gegenstand der vorliegenden Erfindung ist ein Polyurethan-Beschichtungsmittel, enthaltend
a) ein oder mehrere Polyesterharze (A),
b) ein oder mehrere Polyacrylatharze (B),
c) ein oder mehrere Di- und/oder Polyisocyanate (C) mit freien oder blockierten Isocyanatgruppen,
d) ein oder mehrere Lichtschutzmittel (L1) auf Basis eines UV-Absorbers,
e) ein oder mehrere Lichtschutzmittel (L2) auf der Basis sterisch gehinderter Amine und
f) ein oder mehrere organische Lösemittel (D).

Die vorliegende Erfindung betrifft außerdem Verfahren zur Herstellung des Beschichtungsmittels sowie die Verwendung des Beschichtungsmittels als Deck- oder Klarlack, insbesondere zur Beschichtung von Kunststoffen.

In der Industrie werden heute zunehmend Formteile auf Kunststoffbasis verwendet, die zusammen mit Metallteilen eingesetzt werden und die einer Lackierung bedürfen. Dies gilt insbesondere für Kraftfahrzeugteile, die in zunehmendem Maße aus Kunststoffteilen gefertigt werden, wie beispielsweise Stoßfängerverkleidungen, Spoiler, Schweller, Radhausverkleidungen und seitliche Verkleidungen bzw. Schutzleisten. Für derartige Formteile werden in zunehmendem Maße Kunststoffe aus Polycarbonat und Polycarbonat-Blends, bevorzugt mit einem Polycarbonatgehalt von mehr als 5 Gew.-%, bezogen auf den Kunststoffanteil, eingesetzt.

Kunststoffe sind jedoch im allgemeinen gegenüber Witterungseinflüssen, wie UV-Strahlung und Feuchtigkeit, empfindlich und zeigen bei entsprechender Belastung vielerlei Probleme, wie z.B. Vergilbung, Versprödung oder Rißbildung, wenn nicht entsprechende Vorsorgemaßnahmen getroffen werden. Zur Vermeidung dieser Probleme ist es beispielsweise bekannt, Kunststoffe, die aufgrund ihrer Verwendung beispielsweise als Automobilaußenteile Witterungseinflüssen ausgesetzt sind, mit Klarlacken oder Decklacken zu versehen. Den für diesen Zweck eingesetzten Lacken werden üblicherweise Lichtschutzmittel zugesetzt, um die durch die UV-Strahlung verursachten Probleme zu vermeiden oder zumindest zu reduzieren.

Die an derartige Lichtschutzmittel zu stellenden Forderungen sind vielfältig. So sollen diese Additive den Lack in den mechanischen und chemischen Eigenschaften nicht negativ beeinflußen. Ferner sollen diese Additive chemisch und gegenüber UV-Strahlung stabil sein sowie außerdem hell, farbtonbeständig und leicht einarbeitbar und mit den anderen Bestandteilen des Lackes verträglich sein. Es ist nun bereits eine Vielzahl unterschiedlicher Lichtschutzmittel und ihre Verwendung in Lacken bekannt.

So werden beispielsweise verschiedene Benzophenon-Derivate, Benzotriazol-Derivate, Triazine, Acrylate, Salicylate, Oxazoline, organische Nickelverbindungen, Ferrocen-Derivate, sterisch gehinderte Amine u.ä. einzeln oder in Kombination als Lichtschutzmittel eingesetzt.

Trotz der Vielzahl bekannter Lichtschutzmittel und bekannter Klarlacksysteme bestehen immer noch große Probleme bei der Beschichtung von eingefärbten, thermoplastischen Kunststoffen, wie sie insbesondere für großflächige Automobilaußenteile verwendet werden. Neben der bereits genannten Witterungsbeständigkeit müssen die eingesetzten Lacke nämlich gleichzeitig eine gute Haftung auf den Kunststoffsubstraten aufweisen und zu einem hydrolysebeständigen Verbund (d.h. gute Haftung nach Feuchteeinwirkung) mit guter Chemikalienresistenz und guter Festigkeit bei Raumtemperatur führen, der auch bei niedrigen Temperaturen von -20 bis -30 °C ein duktiles Bruchverhalten zeigt. Im Bereich der Kunststofflackierung besteht außerdem noch die Forderung, daß die eingesetzten Beschichtungsmittel bei niedrigen Temperaturen (im allgemeinen < 100°C) aushärtbar sind und auch bei Aushärtung bei diesen niedrigen Temperaturen zu Filmen mit den gewünschten Eigenschaften führen.

Aus der DE-A-43 26 670 ist ein Polyurethan-Beschichtungsmittel auf der Basis eines Hydroxybutyl(meth)acrylat enthaltenden Polyacrylatharzes und ggf. weiterer Polyacrylat- und/oder Polykondensationsharze und Polyisocyanaten als Vernetzer sowie dessen Verwendung als Klarlack im Bereich der Autoreparaturlackierung und zur Beschichtung von Kunststoffen bekannt. Als Lichtschutzmittel enthält der Klarlack eine Mischung aus Benztriazin als UV-Absorber und einem Lichtschutzmittel auf Basis sterisch gehinderter Amine (Tinuvin® 292 der Firma Ciba Geigy, Lichtschutzmittel auf Basis Bis-(1,2,2,6,6-pentamethyl-4-piperidyl)sebacat).

Aus der EP-B-455 211 ist schließlich ein Effekt-Basislack zur direkten Beschichtung von aus Polypropylen bestehenden oder Polypropylen enthaltenden, nichtgrundierten Kunststoffsubstraten bekannt. Dieser dort beschriebene Effekt-Basislack enthält neben physikalisch trocknenden Bindemitteln Celluloseacetobutyrat und 0,6 bis 15 Gew.-% eines oder mehrerer chlorierter Polyolefine. Klarlacke und Decklacke sind jedoch in der EP-B-455 211 nicht beschrieben.

Die US 5,145,893 beschreibt die Verwendung bestimmter sterisch gehinderter Amine allgemein als Stabilisatoren für Polymere, welches im Prinzip alle bekannten Polymere sein können, dabei sind die beschriebenen sterisch gehinderten Amine am Stickstoff alkoxyliert.

In der US 5,504,178 sind Mischungen aus Polyestern, Polyacrylaten und Isocyanaten beschrieben, welche mit UV-Absorbern und sterisch gehinderten Aminen stabilisiert werden. Die verwendeten sterisch gehinderten Amine sind auch hier am Stickstoff alkoxyliert.

Der vorliegenden Erfindung liegt somit die Aufgabe zugrunde, Beschichtungsmittel zur Verfügung zu stellen, die neben einer guten Witterungsbeständigkeit der resultierenden Beschichtungen gleichzeitig eine gute Haftung auf den Kunststoffsubstraten aufweisen und die zu einem hydrolysebeständigen Verbund (d.h. gute Haftung nach Feuchteeinwirkung) mit guter Chemikalienrestistenz und guter Festigkeit bei Raumtemperatur führen, wobei der Verbund auch bei niedrigen Temperaturen von -20 bis -30 °C ein duktiles Bruchverhalten zeigt.

Diese Aufgabe wird überraschenderweise durch ein Beschichtungsmittel der eingangs genannten Art gelöst, das dadurch gekennzeichnet ist, daß
1.) der Polyester (A) eine OH-Zahl von 80 bis 200 mg KOH/g und eine Säurezahl < 10 mgKOH/g aufweist,
2.) das Polyacrylatharz (B) eine OH-Zahl von 80 bis 200 mgKOH/g und eine Säurezahl < 20 mgKOH/g aufweist und
3.) das Lichtschurzmittel (L2) auf Basis sterisch gehinderter Amine aminoetherfunktionalisiert ist.

Gegenstand der vorliegenden Erfindung sind außerdem Verfahren zur Herstellung dieses Beschichtungsmittels sowie die Verwendung dieses Beschichtungsmittels als Decklack oder Klarlack, insbesondere zur Beschichtung von Kunststoffen.

Es ist überraschend und war nicht vorhersehbar, daß durch die Verwendung einer speziellen Bindemittelkombination und gleichzeitig einer speziellen Lichtschutzmittelkombination Beschichtungsmittel zur Verfügung gestellt werden können, die als Schutzlackierung für farbig pigmentierte Kunststoffe geeignet sind und alle an derartige Beschichtungsmittel üblicherweise gestellten Anforderungen erfüllen. So zeichnen sich die unter Verwendung dieser Beschichtungsmittel hergestellten Überzüge durch eine gute Witterungsbeständigkeit bei gleichzeitig guter Haftung auf den Kunststoffsubstraten aus. Ferner führen sie zu einem hydrolysebeständigen Verbund (d.h. gute Haftung nach Feuchteeinwirkung) mit guter Chemikalienrestistenz und guter Festigkeit bei Raumtemperatur, der auch bei niedrigen Temperaturen von -20 bis -30 °C ein duktiles Bruchverhalten zeigt.

Im folgenden werden nun zunächst die einzelnen Bestandteile des erfindungsgemäßen Beschichtungsmittels näher erläutert.

Es ist erfindungwesentlich, daß das Beschichtungsmittel als Bindemittel eine Mischung aus
a) mindestens einem Polyester (A) mit einer OH-Zahl von 80 bis 200 mg KOH/g, bevorzugt 130 bis 180 mgKOH/g, und mit einer Säurezahl < 10 mgKOH/g, bevorzugt < 5 mgKOH/g, und
b) mindestens einem Polyacrylatharz (B) mit einer OH-Zahl von 80 bis 200 mgKOH/g, bevorzugt von 100 bis 150 mgKOH/g, und einer Säurezahl < 20 mgKOH/g, bevorzugt < 10 mgKOH/g,
enthält.

Bevorzugt enthält das Beschichtungsmittel den oder die Polyester (Komponente (A)) und das oder die Polyacrylatharze (Komponente (B)) in solchen Mengen, daß die Mischung aus
a) 40 bis 80 Gew.-%, bevorzugt 55 bis 70 Gew.-%, der Komponente (A) und
b) 60 bis 20 Gew.-%, bevorzugt 45 bis 30 Gew.-%, der Komponente (B) besteht,
wobei die Angaben jeweils bezogen sind auf den Festkörper der Harze und wobei die Summe der Gew.%-Angaben der Komponenten (A) und (B) 100 Gew.-% beträgt.

Bevorzugt werden die Bindemittel außerdem in dem erfindungsgemäßen Beschichtungsmittel in solchen Mengen eingesetzt, daß die Summe aus der Menge an eingesetzten Polyestern (A) und der Menge an eingesetzten Polyacrylatharzen (B) 30 bis 70 Gew.-%, besonders bevorzugt 40 bis 60 Gew.-%, jeweils bezogen auf den Festkörpergehalt der Bindemittel und auf das Gesamtgewicht des Stammlacks (d.h. Beschichtungsmittel ohne Vernetzer-Komponente (C)), beträgt.

Für den Einsatz in den erfindungsgemäßen Beschichtungsmitteln sind prinzipiell alle Polyester mit den obengenannten OH-Zahlen und Säurezahlen geeignet. Bevorzugt weisen die Polyester (A) ein zahlenmittleres Molekulargewicht von 700 bis 1.500 auf.

Bevorzugt werden Polyester eingesetzt, die erhältlich sind durch Umsetzung von
p1) Di- und/oder Polycarbonsäuren oder deren veresterungsfähigen Derivaten, gegebenenfalls zusammen mit Monocarbonsäuren,
p2) Diolen,
p3) Polyolen, gegebenenfalls zusammen mit Monoolen, und
p4) gegebenenfalls weiteren modifizierenden Komponenten.

Besonders bevorzugt werden dabei Polyester eingesetzt, die ohne Verwendung von Monoolen und Monocarbonsäuren hergestellt worden sind. Ebenfalls besonders bevorzugt sind die Polyester frei von ungesättigten Fettsäuren.

Als Beispiele für Di- und Polycarbonsäuren, die als Komponente (p1) eingesetzt werden können, seien aromatische, aliphatische und cycloaliphatische Di- und Polycarbonsäuren genannt. Bevorzugt werden als Komponente (p1) aromatische, ggf. zusammen mit aliphatischen, Di- und Polycarbonsäuren eingesetzt.

Beispiele für geeignete Polycarbonsäuren sind Phthalsäure, Isophthalsäure, Terephthalsäure, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure, Cyclobutantetracarbonsäure und andere. Die cycloaliphatischen Polycarbonsäuren können sowohl in ihrer cisals auch in ihrer trans-Form sowie als Gemisch beider Formen eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Beispiele für Monocarbonsäuren, die gegebenenfalls zusammen mit den Polycarbonsäuren eingesetzt werden können, sind Benzoesäure, tert.-Butylbenzoesäure, Laurinsäure, Isononansäure und hydrierte Fettsäuren natürlich vorkommender Öle, bevorzugt Isononansäure.

Geeignete Diole (p2) zur Herstellung des Polyesters (A) sind beispielsweise Ethylenglykol, Propandiole, Butandiole, Hexandiole, Hydroxypivalinsäureneopentylglykolester, Neopentylglykol, Diethylenglykol, Cyclohexandiol, Cyclohexandimethanol, Trimethylpentandiol und Ethylbutylpropandiol. Ferner sind auch aliphatische Polyetherdiole, wie lineare oder verzweigte Poly(oxyethylen)glykole, Poly(oxypropylen)glykole und/oder Poly(oxybutylen)glykole und gemischte Polyetherdiole wie Poly(oxyethylenoxypropylen)glykole geeignet. Die Polyetherdiole haben üblicherweise eine Molmasse Mn von 400 bis 3000.

Ferner können als Diole auch aromatische oder alkylaromatische Diole eingesetzt werden, wie z. B. 2-Alkyl-2-phenyl-propan-1,3-diol, Bisphenol-Derivate mit Etherfunktionalität usw.

Als weitere Diole sind auch Ester von Hydroxycarbonsäuren mit Diolen geeignet, wobei als Diol die voranstehend genannten Diole eingesetzt werden können. Beispiele für Hydroxycarbonsäuren sind Hydroxypivalinsäure oder Dimethylolpropansäure.

Beispiele für als Komponente (p3) geeignete Polyole sind Ditrimethylolpropan, Trimethylolethan, Trimethylolpropan, Glycerin, Pentaerythrit, Homopentaerythrit, Dipentaerythrit, Trishydroxiethylisocyanat, 1,2,4 Butantriol, Propan- und Hexan-Triole, Trihydroxycarbonsäuren, wie Trishydroxymethyl(ethyl)ethansäuren. Die Polyole mit mindestens 3 OH-Gruppen können allein oder als Gemisch eingesetzt werden. Gegebenenfalls können die Triole zusammen mit einwertigen Alkoholen, wie beispielsweise Butanol, Octanol, Laurylalkohol, Cyclohexanol, tert.-Butylcyclohexanol, ethoxylierten bzw. propoxylierten Phenolen eingesetzt werden.

Als Komponente (p4) zur Herstellung der Polyester (A1) geeignet sind insbesondere Verbindungen, die eine gegenüber den funktionellen Gruppen des Polyesters reaktive Gruppe aufweisen. Als modifizierende Komponente (p4) können Diepoxidverbindungen, gegebenenfalls auch Monoepoxidverbindungen verwendet werden. Geeignete Komponenten (p4) sind beispielsweise in der DE-A-40 24 204 auf Seite 4, Zeilen 4 bis 9, beschrieben.

Als Komponente (p4) zur Herstellung der Polyester (A) geeignet sind auch Verbindungen, die außer einer gegenüber den funktionellen Gruppen des Polyesters (A) reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE-A-40 24 204, Seite 4, Zeilen 10 bis 49, verwiesen.

Die Herstellung der Polyester (A) erfolgt nach den bekannten Methoden der Veresterung, wie dies beispielsweise in der DE-A-40 24 204, Seite 4, Zeilen 50 bis 65, beschrieben ist.

Die Umsetzung erfolgt dabei üblicherweise bei Temperaturen zwischen 180 und 280 Grad C, gegebenenfalls in Gegenwart eines geeigneten Veresterungskatalysators, wie z.B. Lithiumoctoat, Dibutylzinnoxid, Dibutylzinndilaurat, para-Toluolsulfonsäure und ähnlichen.

Üblicherweise wird die Herstellung der Polyester (A) in Gegenwart geringer Mengen eines geeigneten Lösungsmittels als Schleppmittel durchgeführt. Als Schleppmittel werden z. B. aromatische Kohlenwasserstoffe, wie insbesondere Xylol, und (cyclo)aliphatische Kohlenwasserstoffe, z. B. Cyclohexan, eingesetzt. Daneben ist es aber auch möglich, die Polyester lösemittelfrei (Umsetzung in Masse) herzustellen.

Für den Einsatz in den erfindungsgemäßen Beschichtungsmitteln sind ferner prinzipiell alle Polyacrylatharze (B) mit den obengenannten OH-Zahlen und Säurezahlen geeignet. Bevorzugt weisen die Polyacrylatharze ein zahlenmittleres Molekulargewicht von 2.500 bis 5.000 auf.

Bevorzugt werden außerdem Polyacrylatharze eingesetzt, bei denen Glycidylester von am α-C-Atom verzweigten Carbonsäuren (z.B. die unter den Namen Cardura® im Handel erhältlichen Glycidylester) einpolymerisiert sind.

Besonders bevorzugt werden Polyacrylatharze (B) eingesetzt, die erhältlich sind durch Polymerisation in einem organischen Lösemittel oder einem Lösemittelgemisch und in Gegenwart mindestens eines Polymerisationsinitiators und ggf. in Gegenwart von Reglern von
a1) einem von (a2), (a3), (a4), (a5) und (a6) verschiedenen, mit (a2), (a3), (a4), (a5) und (a6) copolymerisierbaren, im wesentlichen säuregruppenfreien (Meth)acrylsäureester oder einem Gemisch aus solchen Monomeren,
a2) einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen säuregruppenfrei ist, oder einem Gemisch aus solchen Monomeren,
a3) einem mindestens eine Säuregruppe, die in die entsprechende Säureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren,
a4) gegebenenfalls einem oder mehreren vinylaromatischen Kohlenwasserstoffen,
a5) mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,
a6) gegebenenfalls einem mit (a1), (a2), (a3), (a4), und (a5) copolymerisierbaren, von (a1), (a2), (a4) und (a5) verschiedenen, im wesentlichen säuregruppenfreien, ethylenisch ungesättigten Monomer oder einem Gemisch aus solchen Monomeren,
wobei (a1), (a2), (a3), (a4), (a5) und (a6) in Art und Menge so ausgewählt werden, daß das Polyacrylatharz (B) die gewünschte OH-Zahl, Säurezahl und das gewünschte Molekulargewicht aufweist.

Zur Herstellung der erfindungsgemäß eingesetzten Polyacrylatharze kann als Komponente (a1) jeder mit (a2), (a3), (a4), (a5) und (a6) copolymerisierbare, im wesentlichen säuregruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat und cycloaliphatische (Meth)acrylsäureester, wie z.B. Cyclohexyl(meth)acrylat, Isobornyl(meth)acrylat, Dicyclopentaen(meth)acrylat und tert.-Butylcyclohexyl(meth)acrylat genannt.

Als Komponente (a1) können auch Ethyltriglykol(meth)acrylat und Methoxyoligoglykol(meth)acrylat mit einem zahlenmittleren Molekulargewicht Mn von vorzugsweise 550 oder andere ethoxylierte und/oder propoxylierte hydroxylgruppenfreie (Meth)acrylsäurederivate eingesetzt werden.

Als Komponente (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und im wesentlichen säuregruppenfrei sind oder ein Gemisch aus solchen Monomeren eingesetzt werden. Als Beispiele werden Hydroxyalkylester der Acrylsäure, Methacrylsäure oder einer anderen alpha,beta-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxyalkylester der Acrylsäure oder Methacrylsäure, in denen die Hydroxyalkylgruppe bis zu 20 Kohlenstoffatome enthält, Umsetzungsprodukte aus cyclischen Estern, wie z.B. epsilon-Caprolacton und diesen Hydroxyalkylestern, oder Mischungen aus diesen Hydroxyalkylestern bzw. epsilon-Caprolacton-modifizierten Hydroxyalkylestern eingesetzt.

Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat, 4-Hydroxybutylmethacrylat, Hydroxystearylacrylat und Hydroxystearylmethacrylat genannt. Entsprechende Ester von anderen ungesättigten Säuren, wie z.B. Ethacrylsäure, Crotonsäure und ähnliche Säuren mit bis zu etwa 6 C-Atomen pro Molekül, können auch eingesetzt werden.

Ferner können als Komponente (a2) auch olefinisch ungesättigte Polyole eingesetzt werden. Bevorzugte Polyacrylatharze (B) werden erhalten, wenn als Komponente (a2) zumindest teilweise Trimethylolpropanmonoallylether eingesetzt wird. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren, eingesetzt werden.

Als Komponente (a3) kann jedes mindestens eine Säuregruppe, vorzugsweise eine Carboxylgruppe, pro Molekül tragende, mit (a1), (a2), (a4), (a5) und (a6) copolymerisierbare, ethylenisch ungesättigte Monomer oder ein Gemisch aus solchen Monomeren eingesetzt werden. Als Komponente (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül eingesetzt werden. Als Beispiele für solche Säuren werden Ethacrylsäure, Crotonsäure, Maleinsäure, Fumarsäure und Itaconsäure genannt. Weiterhin können beispielsweise ethylenisch ungesättigte Sulfon- oder Phosphonsäuren, bzw. deren Teilester, als Komponente (a3) eingesetzt werden. Als Komponente (a3) können auch Maleinsäuremono(meth)acryloyloxyethylester, Bernsteinsäuremono(meth)acryloyloxyethylester und Phthalsäuremono(meth)acryloyloxyethylester eingesetzt werden.

Als Komponente (a4) werden vinylaromatische Kohlenwasserstoffe, wie Styrol, alpha-Alkylstyrole und Vinyltoluol, eingesetzt.

Als Komponente (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Komponente (a6) können alle mit (a1), (a2), (a3), (a4) und (a5) copolymerisierbaren, von (a1), (a2), (a3) und (a4) verschiedenen, im wesentlichen säuregruppenfreien ethylenisch ungesättigten Monomere oder Gemische aus solchen Monomeren eingesetzt werden.

Als Komponente (a6) können ein oder mehrere Vinylester von in alpha-Stellung verzweigten Monocarbonsäuren mit 5 bis 18 C-Atomen im Molekül eingesetzt werden. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt.

Besonders bevorzugt werden - wegen der guten Verfügbarkeit- Vinylester von gesättigten aliphatischen Monocarbonsäuren mit 9 bis 11 C-Atomen, die am alpha-C-Atom verzweigt sind, eingesetzt.

Als Komponente (a6) können in Kombination mit anderen als Komponente (a6) geeignet genannten Monomeren auch Polysiloxanmakromonomere eingesetzt werden. Geeignet sind Polysiloxanmakromonomere, die ein zahlenmittleres Molekulargewicht Mn von 1.000 bis 40.000 Dalton, bevorzugt von 2.000 bis 10.000 Dalton, und im Mittel 0,5 bis 2,5, bevorzugt 0,5 bis 1,5, ethylenisch ungesättigte Doppelbindungen pro Molekül aufweisen. Geeignet sind beispielsweise die in der DE-A 38 07 571 auf den Seiten 5 bis 7, die in der DE-A 37 06 095 in den Spalten 3 bis 7, die in der EP-B 358 153 auf den Seiten 3 bis 6 und die in der US-A 4,754,014 in den Spalten 5 bis 9 beschriebenen Polysiloxanmakromonomere. Ferner sind auch andere Acryloxysilan-enthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Bevorzugt werden als Komponente (a6) die in der DE-A 44 21 823 angeführten Polysiloxanmakromonomere eingesetzt.

Beispiele für als Komponente (a6) geeignete Polysiloxanmakromonomere sind auch die in der internationalen Patentanmeldung mit der Veröffentlichungsnummer WO 92/22615 auf Seite 12, Zeile 18, bis Seite 18, Zeile 10, genannten Verbindungen.

Die Einsatzmenge des oder der Polysiloxanmakromonomeren (a6) zur Modifizierung der Acrylatcopolymerisate beträgt weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats (B) eingesetzten Monomeren.

Besonders bevorzugt eingesetzte Acrylatharze werden erhalten durch Polymerisation von
(a1) 5 bis 50 Gew.-%, bevorzugt 10 bis 40 Gew.-%, der Komponente (a1),
(a2) 3 bis 45 Gew.-%, bevorzugt 15 bis 35 Gew.-%, der Komponente (a2),
(a3) 1 bis 15 Gew.-%, bevorzugt 5 bis 10 Gew.-%, der Komponente (a3),
(a4) 10 bis 50 Gew.-%, bevorzugt 15 bis 45 Gew.-%, der Komponente (a4),
(a5) 3 bis 50 Gew.-%, bevorzugt 15 bis 35 Gew.-%, der Komponente (a5) und
(a6) 0 bis 30 Gew.-%, bevorzugt 0 bis 25 Gew.-%, der Komponente (a6),
wobei die Summe der Gewichtsanteile der Komponenten (a1) bis (a6) jeweils 100 Gew.-% beträgt.

Die Herstellung der erfindungsgemäß eingesetzten Polyacrylatharze (B) erfolgt in einem organischen Lösemittel oder Lösemittelgemisch und in Gegenwart mindestens eines Polymerisationsinitiators und ggf. eines Reglers. Als organische Lösemittel, Polymerisationsinitiatoren und Regler werden die für die Herstellung von Polyacrylatharzen üblichen Lösemittel, Regler und Polymerisationsinitiatoren eingesetzt. Dabei können die Lösemittel an der Reaktion mit der vernetzenden Komponente (C) teilnehmen und somit als Reaktivverdünner wirken.

Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, Trimethylolpropan, 2-Hydroxypropionsäureethylester und 3-Methyl-3-methoxybutanol sowie Derivate auf Basis Propylenglykol, z.B. Ethylethoxypropionat, Isopropoxypropanol, Methoxypropylacetat u.ä., genannt.

Als Beispiele für brauchbare Polymerisationsinitiatoren werden freie Radikale bildende Initiatoren, wie z.B. tert.-Butylperoxyethylhexanoat, Benzoylperoxid, Azobisisobutyronitril und tert.-Butylperbenzoat genannt. Die Initiatoren werden bevorzugt in einer Menge von 2 bis 25 Gew.-%, besonders bevorzugt von 4 bis 10 Gew.-%, bezogen auf das Gesamtgewicht der Monomeren, eingesetzt.

Als Beispiele für geeignete Regler seien Mercaptane, wie z.B. Mercaptethanol, Thiolglykolsäureester und Chlorwasserstoffe u.ä. genannt. Die Regler werden bevorzugt in einer Menge von 0,1 bis 15 Gew.-%, besonders bevorzugt von 0,5 bis 5 Gew.-%, bezogen auf das Gesamtgewicht der Monomeren, eingesetzt.

Die Polymerisation wird zweckmäßigerweise bei einer Temperatur von 80 bis 160 Grad C, vorzugsweise 110 bis 160 Grad C, durchgeführt.

Ggf. können die Beschichtungmittel noch 0 bis 25 Gew.-%, bezogen auf das Gewicht des Stammlackes ohne Vernetzer-Komponente und bezogen auf den Festkörpergehalt, eines oder mehrerer, von den Komponenten (A) und (B) verschiedenen, hydroxylgruppenhaltiger Bindemittel, wie z.B. hydroxylgruppenhaltige Polyurethanharze, andere Polyester oder andere Acrylatharze, enthalten.

Als Vernetzer (C) enthalten die erfindungsgemäßen Beschichtungsmittel ein oder mehrere Di- und/oder Polyisocyanate mit freien oder blockierten Isocyanatgruppen. So können beliebige organische Polyisocyanate mit aliphatisch, cycloaliphatisch, araliphatisch und/oder aromatisch gebundenen Isocyanatgruppen eingesetzt werden. Bevorzugt werden Polyisocyanate mit 2 bis 5 Isocyanatgruppen pro Molekül eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω'-Diisocyanatodipropylether, Cyclobutan-1,3-diisocyanat, Cyclohexan-1,3- und -1,4-diisocyanat, 2,2- und 2,6-Diisocyanato-1-methylcyclohexan, 3-Isocyanatomethyl-3,5,5-trimethylcyclohexylisocyanat("Isophorondiisocyanat"), 2,5- und 3,5-Bis(isocyanatomethyl)-8-methyl-1,4-methano-decahydronaphthalin, 1,5-, 2,5-, 1,6- und 2,6-Bis(isocyanatomethyl)-4,7-methanohexahydroindan, 1,5-, 2,5-, 1,6- und 2,6-Bis(isocyanato)-4,7-methanhexahydroindan, Dicyclohexyl-2,4'- und -4,4'-diisocyanat, 2,4- und 2,6-Hexahydrotoluylendiisocyanat, Perhydro-2,4'- und -4,4'-diphenylmethandiisocyanat, ω,ω'-Diisocyanato-1,4-diethylbenzol, 1,3- und 1,4-Phenylendiisocyanat, 4,4'-Diisocyanato-diphenyl, 4,4'-Diisocyanato-3,3'-dichlordiphenyl, 4,4'-Diisocyanato-3,3'-dimethoxi-diphenyl, 4,4'-Diisocyanato-3,3'-dimethyl-diphenyl, 4,4'-Diisocyanato-3,3'-diphenyl-diphenyl, 2,4'- und 4,4'-Diisocyanato-diphenylmethan, Naphthylen-1,5-diisocyanat, Toluylendiisocyanate, wie 2,4- bzw. 2,6-Toluylendiisocyanat, N,N'-(4,4'-Dimethyl-3,3'-diisocyanatodiphenyl)-uretdion, m-Xylylendiisocyanat, Dicyclohexylmethandiisocyanat, Tetramethylxylylendiisocyanat, aber auch Triisocyanate, wie 2,4,4'-Triisocyanatodiphenylether, 4,4',4''-Triisocyanatotriphenylmethan. Bevorzugt werden, ggf. in Kombination mit den obengenannten Polyisocyanaten, Isocyanuratgruppen und/oder Biuretgruppen und/oder Allophanatgruppen und/oder Urethangruppen und/oder Harnstoffgruppen aufweisende Polyisocyanate eingesetzt. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische und/oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat, Dicyclohexylmethan-4,4'-diisocyanat und 1,3-bis-(2-Isocyanatopropyl-2-)benzol (TMXDI) oder Mischungen aus diesen Polyisocyanaten, ganz besonders bevorzugt Isocyanate auf Basis Hexamethylendiisocyanat und/oder Isophorondiisocyanat, eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanatkomponente (C) kann im übrigen auch aus beliebigen Gemischen der genannten Polyisocyanate bestehen.

Die Polyisocyanatkomponente (C) wird bevorzugt in Form der freie Isocyanatgruppen enthaltenden Verbindungen eingesetzt und die Beschichtungsmittel entsprechend als Zweikomponentenlacke formuliert. In diesem Fall kann ein Teil der insgesamt eingesetzten Lösemittel auch der vernetzer-Komponente zugesetzt werden.

Es können aber auch Einkomponentenlacke auf der Basis blockierter Isocyanate formuliert werden, wenn zur Blockierung der Polyisocyanate Blockierungsmittel mit einer ausreichend tiefen Deblockierungstemperatur eingesetzt werden. Derartige Blockierungsmittel sind dem Fachmann gut bekannt und brauchen hier nicht näher erläutert zu werden.

Die Isocyanatkomponente (C) wird üblicherweise in einer solchen Menge eingesetzt, daß das Äquivalentverhältnis von OH-Gruppen der Bindemittel und ggf. von OH-Gruppen der Lichtschutzmittel zu den Isocyanatgruppen des Vernetzers zwischen 1,2 : 1 und 0,7 : 1 liegt.

Ferner kann das erfindungsgemäße Beschichtungsmittel ggf. noch weitere Vernetzungsmittel enthalten, insbesondere mit den Hydroxylgruppen der Bindemittel und ggf. der Lichtschutzmittel unter Ether- und/oder Esterbildung vernetzende Komponenten auf Triazinbasis. Bei den unter Etherbildung mit den Hydroxylgruppen der Bindemittel reagierenden Vernetzern handelt es sich um Aminoplastharze. Aminoplastharze sind dem Fachmann gut bekannt und werden von vielen Firmen als Verkaufsprodukte angeboten. Es handelt sich um Kondensationsprodukte aus Aldehyden, insbesondere Formaldehyd, und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Es werden insbesondere mit niedrigen Alkoholen, insbesondere mit Methanol oder Butanol veretherte Melamin-Formaldehydharze eingesetzt. Ganz besonders bevorzugt werden mit niedrigen Alkoholen, insbesondere mit Methanol und/oder Ethanol und/oder Butanol veretherte Melamin-Formaldehydharze, die im statistischen Mittel pro Triazinring noch 0,1 bis 0,25 an Stickstoffatome gebundene Wasserstoffatome enthalten, als weitere Vernetzer eingesetzt.

Bei den unter Estergruppenbildung mit den Hydroxylgruppen des Bindemittels reagierenden Vernetzern auf Triazin-Basis handelt es sich um Umesterungsvernetzer, wie bevorzugt Tris(alkoxycarbonylamino)triazin o.ä., wie beispielsweise auch in der EP-A-604 922 beschrieben.

Dieses weitere Vernetzungsmittel wird üblicherweise in einer Menge von 0 bis 30 Gew.-%, bezogen auf das Gewicht der Isocyanatkomponente, eingesetzt. Wenn das Beschichtungsmittel allerdings zur Beschichtung thermisch empfindlicher Substrate eingesetzt wird, enthält es bevorzugt keine weiteren Vernetzungsmittel bzw. nur solche weiteren Vernetzungsmittel, die auch bei niedrigen Temperaturen härtbar sind.

Es ist erfindungswesentlich, daß die Beschichtungsmittel als Lichtschutzmittel eine Kombination aus
d) einem oder mehreren Lichtschutzmitteln (L1) auf Basis eines UV-Absorbers und
e) einem oder mehreren Lichtschutzmitteln (L2) auf der Basis sterisch gehinderter Amine, die aminoetherfunktionalisiert sind, enthalten.

Bevorzugt werden die Lichtschutzmittel (L1) und (L2) in den erfindungsgemäßen Beschichtungsmitteln in solchen Mengen eingesetzt, daß das Beschichtungsmittel 0,7*0,0185*10⁻³ Mol bis 3,5*0,0185*10⁻³ Mol, besonders bevorzugt 1,4*0,0185*10⁻³ Mol bis 2,8*0,0185*10⁻³ Mol UV-absorbierende Gruppen des bzw. der Lichtschutzmittel (L1) und 2,0*0,0185*10⁻³ Mol bis 6,0*0,0185*10⁻³ Mol, besonders bevorzugt 3,0*0,0185*10⁻³ Mol bis 5,0*0,0185*10⁻³ Mol sterisch gehinderter Aminogruppen des bzw. der Lichtschutzmittel (L2) enthält, wobei die Mol-Angaben bezogen sind auf 1g Festkörper des Stammlacks, d.h. ohne Lösemittel und ohne Vernetzer.

Als Lichtschutzmittel (L1) auf Basis eines UV-Absorbers werden bevorzugt Lichtschutzmittel vom Benztriazol-Typ und/oder Triazin-Typ eingesetzt. Als Lichtschutzmittel (L1) geeignet sind daher z.B. die im Handel unter den folgenden Namen erhältlichen Produkte:
Tinuvin® 384 der Firma Ciba Geigy, Lichtschutzmittel auf Basis Iso-octyl-3-(3-(2H-benzotriazol-2-yl)-5-tert.butyl-4-hydroxyphenylpropionat, mittleres Molekulargewicht 451,6
Tinuvin® 1130 der Firma Ciba Geigy, Lichtschutzmittel auf Basis des Reaktionsproduktes aus Polyethylenglykol 300 und Methyl-3-[3-(2H-benzotriazol-2-yl)-5-tert.butyl-4-hydroxyphenyl]propionat, mittleres Molekulargewicht > 600
CYAGARD® UV-1164L der Firma Dyna Cytec, Lichtschutzmittel auf Basis 2,4-Bis(2,4-dimethylphenyl)-6-(2-hydroxy-4-isooctyloxyphenyl)-1,3,5-triazin, mittleres Molekulargewicht 510, 65 %ig in Xylol
Besonders bevorzugt werden als Lichtschutzmittel (L1) immobilisierbare Lichtschutzmittel auf Benztriazolund/der Triazin-Basis eingesetzt, d.h. Lichtschutzmittel, die pro Molekül mindestens 1 gegenüber dem Vernetzungsmittel reaktive Gruppe, insbesondere mindestens eine aliphatische OH-Gruppe, enthalten.

Beispiele für solche besonders bevorzugt als Komponente (L1) eingesetzten, immobilisierbaren Lichtschutzmittel sind die im Handel unter den folgenden Namen erhältlichen Produkte:
Tinuvin® 400 der Firma Ciba Geigy, Lichtschutzmittel auf Basis einer Mischung aus 2-[4-((2-Hydroxy-3-dodecyloxypropyl)oxy)-2-hydroxyphenyl]-4,6-bis(2,4-dimethylphenyl)-1,3,5-triazin und 2-[4-((2-Hydroxy-3-tridecyloxypropyl)oxy)-2-hydroxyphenyl]-4,6-bis(2,4-dimethylphenyl)-1,3,5-triazin, mittleres Molekulargewicht 654, 85%ig in 1-Methoxy-2-propanol
CGL 1545 der Firma Ciba Geigy, Lichtschutzmittel auf Basis 2-[4-((2-Hydroxy-3-octyloxypropyl)oxy)-2-hydroxyphenyl]-4,6-bis(2,4-dimethylphenyl)-1,3,5-triazin, mittleres Molekulargewicht 583
CYAGARD® UV-3801 der Firma Dyno Cytec, immobilisierbares Lichtschutzmittel auf Basis Triazin, mittleres Molekulargewicht 498
CYAGARD® UV-3925 der Firma Dyno Cytec, immobilisierbares Lichtschutzmittel auf Basis Triazin, mittleres Molekulargewicht 541
Als Lichtschutzmittel (L2) sind alle Lichtschutzmittel auf Basis sterisch gehinderter Amine (HALS) geeignet, bei denen die Aminofunktion ethersubstiuiert ist (in der vorliegenden Anmeldung kurz als aminoetherfunktionalisiert bezeichnet). Als Lichtschutzmittel (L2) geeignet sind daher insbesondere aminoetherfunktionalisierte, substituierte Piperidin-Derivate, wie z.B. aminoetherfunktionalisierte 2,2,6,6,-Tetramethylpiperidin-Derivate.

Aufgrund der Aminoetherfunktion hat das Lichtschutzmittel (L2) nur schwach-basischen Charakter. Es ist daher bevorzugt, daß als Lichtschutzmittel (L2) Lichtschutzmittel auf Basis sterisch gehinderter Amine eingesetzt werden, die einen pK_{B}-Wert von mindestens 9,0, bevorzugt von mindestens 9,5, aufweisen. Dabei werden außerdem bevorzugt als Lichtschutzmittel (L2) solche sterisch gehinderten Amine eingesetzt, die sowohl unter den Lagerund Applikationsbedingungen als auch insbesondere bei den Gebrauchsbedingungen der beschichteten Substrate (besonders bei Feuchtebelastung) nicht hydrolysierbar sind.

Geeignet als Komponente (L2) sind beispielsweise die im Handel unter den folgenden Namen erhältlichen Produkte:
Tinuvin® 123 der Firma Ciba Geigy, Lichtschutzmittel auf Basis Bis(1-octyloxy-2,2,6,6-tetramethyl-4-piperidyl)sebacat, mittleres Molekulargewicht 737, pK_{B}-Wert 9,6 und
die unter dem Namen Sanol® der Firma Sankyo erhältlichen, entsprechenden Lichtschutzmittel.

Besonders bevorzugt werden als Lichtschutzmittel (L2) immobilisierbare, aminoetherfunktionalisiserte Lichtschutzmittel auf Basis sterisch gehinderter Amine eingesetzt, d.h. Lichtschutzmittel, die pro Molekül mindestens 1 gegenüber dem Vernetzungsmittel reaktive Gruppe, insbesondere mindestens 1 OH-Gruppe, enthalten. Als Lichtschutzmittel (L2) besonders bevorzugt eingesetzt werden daher insbesondere aminoetherfunktionalisierte, substituierte Piperidin-Derivate, wie z.B. aminoetherfunktionalisierte 2,2,6,6,-Tetramethylpiperidin-Derivate, die pro Molekül mindestens 1 gegenüber dem Vernetzungsmittel reaktive Gruppe, insbesondere mindestens 1 OH-Gruppe, enthalten.

Beispiele für solche besonders bevorzugt als Komponente (L2) eingesetzten, immobilisierbaren Lichtschutzmittel sind auch die entsprechenden im Handel erhältlichen Produkte.

Das erfindungsgemäße Beschichtungsmittel enthält außerdem als Komponente (D) übliche, zur Herstellung von Lacken gebräuchliche organische Lösemittel, bevorzugt in einer Menge von 0 bis 69 Gew.-%, bezogen auf das Gewicht des Beschichtungsmittels. Üblicherweise wird dabei ein Großteil der Lösemittel durch Verwendung der Bindemittel in Form von Lösungen oder Dispersionen in die Beschichtungsmittel eingebracht. Darüber hinaus können den Beschichtungsmitteln aber noch zusätzlich weitere Lösemittel zugesetzt werden, um in dem Fachmann bekannter Weise gezielt die Eigenschaften des Beschichtungsmittels zu steuern.

Bevorzugt enthält das erfindungsgemäße Beschichtungsmittel ferner noch 0 bis 5 Gew.-%, besonders bevorzugt 0 bis 2 Gew.-%, eines oder mehrerer Celluloseester, jeweils bezogen auf den Festkörpergehalt des Stammlacks und bezogen auf den Festkörpergehalt des Cellulose esters. Beispiele für geeignete Celluloseester sind Cellulosenitrat, Cellulosepropionat, Cellulosebutyrat, Celluloseacetobutyrat, Celluloseacetopropionat, Mischungen derselben und ähnliches. Es können ferner selbstverständlich auch Mischungen verschiedener Celluloseester eingesetzt werden. Bevorzugt wird Celluloseacetobutyrat eingesetzt.

Das erfindungsgemäße Beschichtungsmittel kann außerdem noch weitere, für die jeweilige Formulierung gebräuchliche Zusätze, wie z.B. Stabilisatoren wie Antioxidantien und Radikalfänger, Verlaufshilfsmittel, Rheologieadditive usw. enthalten, bevorzugt in einer Menge von 0 bis 1 Gew.-%, bezogen auf das Gesamtgewicht des Stammlacks.

Das erfindungsgemäße Beschichtungsmittel kommt insbesondere als Decklack und ganz besonders bevorzugt als Klarlack zum Einsatz. Es enthält daher im allgemeinen keine oder nur transparente Pigmente. Enstprechend enthält es daher - falls überhaupt - nur transparente Füllstoffe.

Das erfindungsgemäße Beschichtungsmittel wird im allgemeinen mittels Mischen und ggf. Dispergieren aus den einzelnen Bestandteilen hergestellt.

Die unter Verwendung der erfindungsgemäßen Beschichtungsmittel hergestellten Beschichtungen zeichnen sich insbesondere durch eine gute Haftung auf Kunststoffen auch nach Feuchtebelastung sowie durch eine gleichzeitig gute Witterungs- und Chemikalienbeständigkeit bei gleichzeitig guter Kälteschlagzähigkeit aus. Gegenstand der Erfindung ist daher auch die Verwendung der Beschichtungesmittel zur Herstellung von Beschichtungen mit diesen Eigenschaften.

Das erfindungsgemäße Beschichtungsmittel wird bevorzugt zur Beschichtung von Kunststoffen, insbesondere von eingefärbten, thermoplastischen Kunststoffen oder Kunststoff-Blends, wie sie insbesondere für großflächige Automobilaußenteile verwendet werden, eingesetzt. Bevorzugt wird es außerdem für die Beschichtung von Polycarbonat enthaltenden Kunststoffen, wie z.B. Polycarbonat oder Polycarbonat/Polybutylenterephthalt-Blends, eingesetzt.

Das erfindungsgemäße Beschichtungsmittel kann selbstverständlich aber auch für andere Lackierungen eingesetzt werden. Es kann daher auch auf andere Substrate, wie beispielsweise Metall, Holz oder Papier, appliziert werden. Die Applikation erfolgt mit Hilfe üblicher Methoden, beispielsweise Spritzen, Rakeln, Tauchen oder Streichen.

Mit dem erfindungsgemäßen Beschichtungsmittel können auch andere grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE,UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es kann auch für die Beschichtung von üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen müssen diese vor der Beschichtung in bekannter Weise einer Vorbehandlung, wie Plasma oder Beflammen, unterzogen werden.

Nachfolgend wird die Erfindung anhand von Ausführungsbeispielen näher erläutert. Dabei bedeuten alle Teile Gewichtsteile, sofern nicht ausdrücklich etwas anderes angegeben wird.

### 1. Herstellung einer Acrylatharzlösung

In einem 4l-Stahlkessel, ausgestattet mit Monomerzulauf, Initiatorzulauf, Rührer und Rückflußkühler, werden 382,5 Teile Cardura® E 10(Glycidylester der Versaticsäure) und 217,5 Teile Shellsol® A vorgelegt und auf 142 °C aufgeheizt. Es wird eine Lösung von 47,0 Teilen Di-tert.-butylperoxid in 147,2 Teilen Xylol so zugegeben, daß die Zugabe in 4,75 h beendet ist. Mit 15 min Verzögerung wird eine Mischung von 250,7 Teilen Methylmethacrylat, 356,2 Teilen Styrol, 276,9 Teilen Hydroxyethylmethacrylat, 112,2 Teilen Acrylsäure und 6,6 Teilen Mercaptoethanol so zugegeben, daß die Zugabe in 4 h beendet ist. Nach Zugabeende des Initiatorzulaufs wird noch 180 min bei 142 °C nachpolymerisiert. Danach wird die Mischung auf eine Temperatur von unter 100 °C gekühlt und mit 338,2 Teilen Xylol, 93,1 Teilen Shellsol® A, 344,8 Teilen Butylacetat und 79,6 Teilen Butylglykolacetat angelöst. Es resultiert eine Lösung des Polyacrylatharzes mit 54 % nichtflüchtigem Anteil (60 min 130 °C Umluftofen), mit einer Säurezahl von 7 mgKOH/g und einer OH-Zahl von 137 mgKOH/g.

### 2. Herstellung einer Polyesterharzlösung

In einer für Polykondensationsreaktionen geeigneten Stahlapparatur werden 946,8 Teile Hexandiol-1,6, 299,1 Teile Trimethylolpropan, 150,3 Teile Phthalsäureanhydrid, 833,8 Teile Isophthalsäureanhydrid, 270,1 Teile Adipinsäure und 87,5 Teile Cyclohexan eingewogen und so lange auf maximal 240 °C Produkttemperatur erhitzt, bis das Gemisch eine Säurezahl < 2 mgKOH/g aufweist. Nach Abdestillieren des Schleppmittels Cyclohexan wird auf eine Temperatur von unter 100 °C gekühlt und mit 558,6 Teilen Butylacetat angelöst. Es resultiert eine Lösung eines Polyesterharzes mit 80 % nichtflüchtigem Anteil (60 min 130 °C Umluftofen) und einer OH-Zahl von 170 mgKOH/g.

### 3. Herstellung der Beschichtungsmittel des Beispiels 1 und der Vergleichsbeispiele V1 bis V3

Aus den in Tabelle 1 angegebenen Bestandteilen werden die Klarlacke des Beispiels 1 und der Vergleichsbeispiele V1 bis V3 hergestellt, indem zu der obenbeschriebenen Polyacrylatharzlösung und/oder Polyesterharzlösung unter Rühren mittels eines Laborrührers die in Tabelle 1 angegebenen weiteren Bestandteile zugegeben werden. Die so erhaltenen Stammlacke werden vor der Applikation unter Rühren mittels eines Laborrührers mit einer 75 %igen Lösung in Butylacetat eines handelsüblichen Isocyanates auf Basis eines trimerisierten Hexamethylendiisocyanates (Desmodur® N der Bayer AG) versetzt. Die Menge der zugegebenen Isocyanatlösung wird dabei so gewählt, daß das Verhältnis der NCO-Gruppen zu den OH-Gruppen der Bindemittel und ggf. der Lichtschutzmittel 1 : 1,18 beträgt.

### 4. Herstellung der eingefärbten Kunststoff-Blends und der Prüftafeln

Die zu lackierenden Kunststofftafeln werden - in dem Fachmann bekannter Weise - mittels Extrusion aus den entsprechenden Rohstoffen unter Verwendung von üblichen Stabilisatoren und ggf. Pigmenten und anschließend unter Verwendung des sogenannten "Injection-molding"-Verfahrens hergestellt.

### 5. Applikation der Klarlacke

Die obenbeschriebenen handelsüblichen Kunststofftafeln (gelber PC/PBT-Blend, XENOY XD 1573-46020 der Firma General Electric Plastics B.V. sowie für die Prüfung der Witterungsbeständigkeit zusätzlich noch ein grauer PC/PBT-Blend, XENOY CL 101 der Firma General Electric Plastics B.V.) werden vor der Beschichtung mit einem mit i-Propanol getränkten Lappen abgewischt. Die obenbeschriebenen Klarlacke werden innerhalb von 2 h nach Isocyanatzugabe über eine pneumatische Spritzpistole mit Luftzerstäubung so appliziert, daß eine Trockenfilmschichtdicke von 32 ± 2 µm resultiert. Die flüssigen Filme werden 10 min bei Raumtemperatur abgelüftet und anschließend 45 min bei 90 °C im Umluftofen gehärtet. Danach werden die Prüftafeln 8 Tage bei 23 °C und 50 % rel. Feuchte gelagert. Anschließend wurde die Haftung mit Hilfe des Gitterschnitt/Klebebandabriß-Tests, mit Hilfe des Dampfstrahltest (100 bar, 80 °C, Winkel Strahl/Ebene 90 °, 10 cm) und mit Hilfe des manuellen Schältests bestimmt. Beim Dampfstrahltest wird mit einem Messer ein Andreaskreuz durch den Lackfilm hindurch bis auf das Substrat geschnitten und auf den Schnittpunkt ein Dampfstrahl gerichtet. Anschließend wird die Haftung beurteilt. Beim manuellen Schältest wird wird mit einem Messer in den Lackfilm geschnitten und versucht, den Lackfilm vom Substrat zu schälen bzw. zu kratzen.

Diese Anfangshaftung war in allen Fällen in Ordnung. Danach wurden die in Tabelle 2 aufgeführten zusätzlichen Prüfungen durchgeführt.

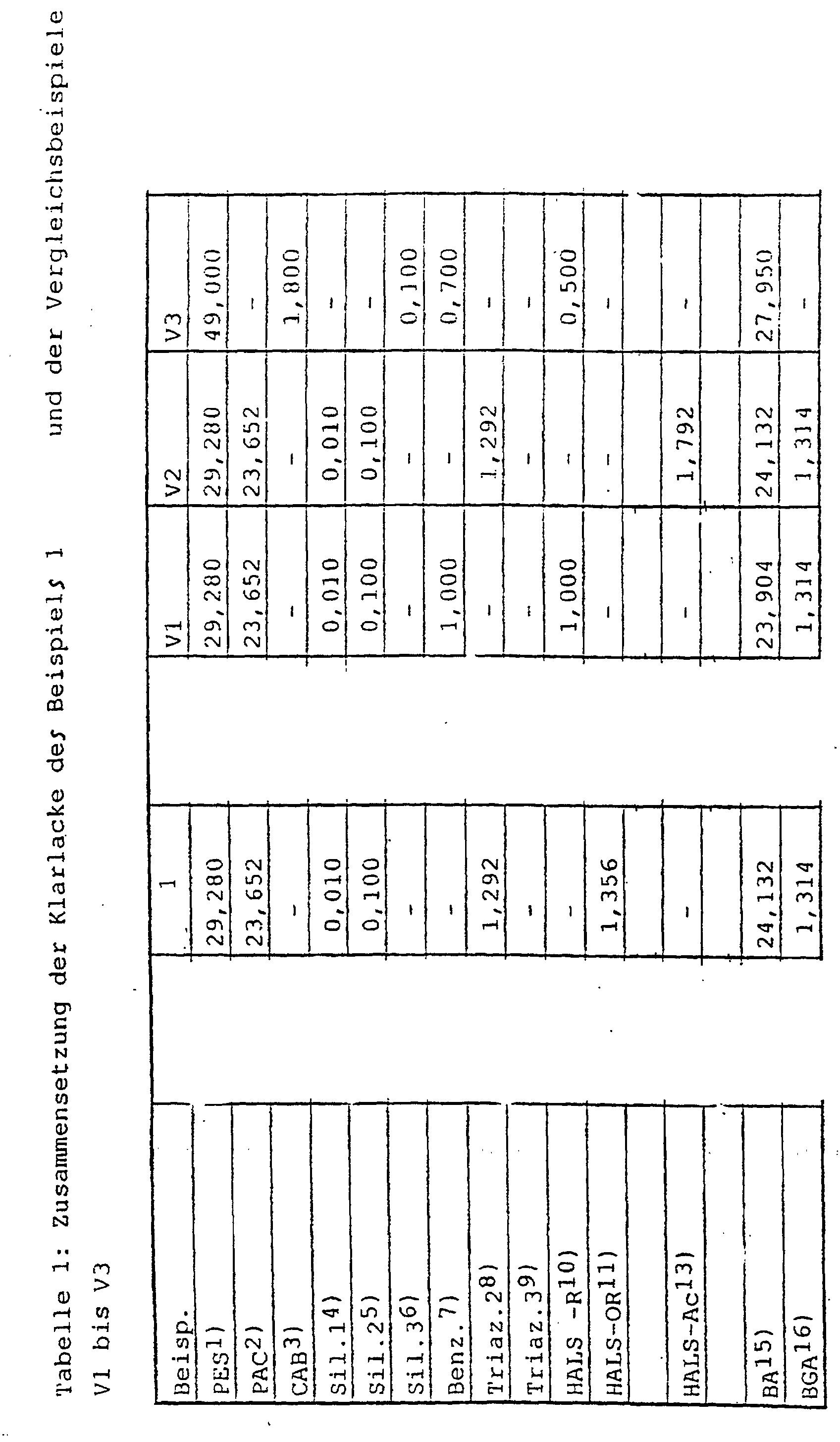

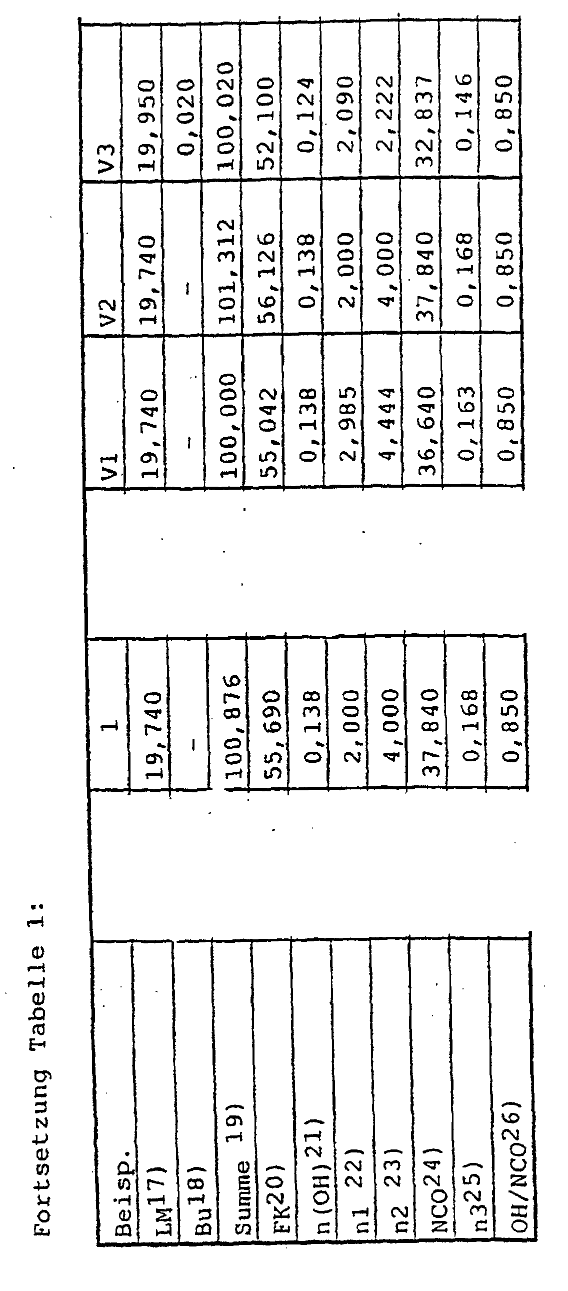

**Tabelle 2:**

| Prüfergebnisse der Beschichtungen | | | | | | |
|---|---|---|---|---|---|---|
| **Beispiel** | | 1 | | V1 | V2 | V3 |
| **Chemikalienresistenz** | | | | | | |
| 16 h RT NaOH(1%ig) | | 0 | | 0 | 0 | 0 |
| 1 h RT H2SO4 (10%ig) | | 0 | | 0 | 0 | 0 |
| 10 min RT Benzin | | 1 | | 1 | 1 | 0 |
| 16 h RT Maschinenöl | | 1 | | 1 | 1 | 1 |
| 1 h RT Bremsflüssigkeit | | 3 | | 3 | 3 | 3 |
| 24 h RT Teer | | 1 | | 1 | 1 | 8 |
| 16 h 40 °C Baumharz | | 3 | | 3 | 3 | 4 |
| | | | | | | |
| **Feuchteresistenz** | | 2-3 | | 5 | 5 | 0 |
| | | | | | | |
| **Kälteschlagzähigkeit bei** | | | | | | |
| **-20 °C** | | | | | | |
| Verhalten | | d | | d | d | d |
| Arbeitsaufnahme (Nm) | | 50 | | 50 | 50 | 85 |
| **-30 °C** | | | | | | |
| Verhalten | | d/ b | | d/ b | d/ b | d/ b |
| Arbeitsaufnahme (Nm) | | 60 | | 60 | 60 | 70 |
| | | | | | | |
| **UV-Beständigkeit gelber K.** | | | | | | |
| 2000 h | | | | | | |
| Aussehen | | i. O. | | i. O. | i. O. | i. O. |
| 3000 h | | | | | | |
| Ausehen | | i. O. | | i. O. | i. O. | R. |
| Schältest | | 2 | | 5 | 1 | 1 |
| | | | | | | |
| **UV-Beständigkeit grauer K.** | | | | | | |
| Glanz (20°) | | | | | | |
| 1000 h | | 76 | | 89 | 81 | 81 |
| 2000 h | | 78 | | 88 | 70 | 83 |
| 2500 h | | 49 | | 73 | - | 47 |
| 3000 h | | 49 | | 68 | - | 23 |
| Rißbildung | | | | | | |
| >2500h/<3000 h | | R | | R | - | R |

Erläuterungen zu Tabelle 1:
1): unter Punkt 2 beschriebener Polyester, angegeben als Festharz ohne Lösemittelanteil
2): unter Punkt 1 beschriebenes Acrylatharz, angegeben als Festharz ohne Lösemittelanteil
3): handelsübliches Celluloseacetobutyrat, 100-%ig, mit einem Acetylgruppengehalt von < 4 % und einem Butyrylgruppengehalt von 49 %
4): handelsübliches Silikonadditiv Siliconöl AR 200 der Firma Wacker Chemie
5) : handelsübliches Silikonadditiv Baysilon® OL 17 der Firma Bayer AG
6): handelsübliches Silikonadditiv Baysilon® OL 44 der Firma Bayer AG
7): Tinuvin® 1130 der Firma Ciba Geigy, handelsübliches Lichtschutzmittel auf Basis des Reaktionsproduktes aus Polyethylenglykol 300 und Methyl-3-[3-(2H-benzotriazol-2-yl)-5-tert.butyl-4-hydroxyphenyl]propionat, mittleres Molekulargewicht > 600
8): Tinuvin® 400 der Firma Ciba Geigy, handelsübliches Lichtschutzmittel auf Basis einer Mischung aus 2-[4- ((2-Hydroxy-3-dodecyloxypropyl)oxy)-2-hydroxyphenyl]-4,6-bis(2,4-dimethylphenyl)-1,3,5-triazin und 2-[4-((2-Hydroxy-3-tridecyloxypropyl)oxy) -2-hydroxyphenyl]-4,6-bis (2,4-dimethylphenyl)-1,3,5-triazin, mittleres Molekulargewicht 654, 85%ig in 1-Methoxy-2-propanol
9): CGL 1545 der Firma Ciba Geigy, Lichtschutzmittel auf Basis 2-[4-((2-Hydroxy-3-octyloxypropyl)oxy)-2-hydroxyphenyl]-4,6-bis(2,4-dimethylphenyl)-1,3,5-triazin, mittleres Molekulargewicht 583
10): Tinuvin® 292 der Firma Ciba Geigy, handelsübliches Lichtschutzmittel auf Basis Bis(1,2,2,6,6-pentamethyl-4-piperidyl)sebacat) mit einem mittleren Molekulargewicht von 508 und einem pK_{B}-Wert von 5,5
11): Handelsprodukt Tinuvin® 123 der Firma Ciba Geigy, handelsübliches Lichtschutzmittel auf Basis Bis(1-octyloxy-2,2,6,6-tetramethyl-4-piperidyl)sebacat) mit einem mittleren Molekulargewicht von 737,2 und einem pK_{B}-Wert von 9,6
13): SANDUVOR 3058 der Firma Clariant France SA, handelsübliches Lichtschutzmittel auf Basis eines N-acylierten 2,2,6,6-Tetramethylpiperidin-Derivates mit einem mittleren Molekulargewicht von 448,7 und einem pH-Wert in Wasser von 6,4
15): Butylacetat
16): Butylglykolacetat
17): Mischung aus Xylol und höheren Alkylaromaten
18): Butanol
19): Summe der Gewichtsanteile aller Bestandteile
20): Festkörpergehalt der Mischung ohne Isocyanat
21): Menge OH-Gruppen der Bindemittel und Lichtschutzmittel in Molen OH-Gruppen
22): Menge an UVA-Lichtschutzmittel in Millimolen aktive Gruppen
23): Menge HALS in Millimolen aktive Gruppen
24): Menge in Gewichtsteilen eines handelsüblichen, Biuretgruppen enthaltenden Isocyanates auf Basis eines Hexamethylendiisocyanat-Trimerisats, 75%ig in Butylacetat
25): Menge Isocyanat in Molen NCO-Gruppen
26): Äquivalentverhältnis OH-Gruppen des Polyesters und des Polyacrylates und ggf. Lichtschutzmittel zu den NCO-Gruppen des Isocyanates

### Erläuterungen zu Tabelle 2:

### Chemikalienresistenz:

Die angegebenen Prüfmedien werden bei der angegebenen Temperatur für die angebene Zeit auf der lackierten Oberfläche belassen und danach mit Wasser abgespült. Danach erfolgt eine visuelle Beurteilung der durch die Prüfmedien hervorgerufenen Markierungen/Verfärbungen der Beschichtung: 0 = keine Veränderung; 5 = beschädigter Lackfilm; Teer: maximale Verfärbung = Note 10

### Feuchteresistenz:

Die zu prüfenden Beschichtungen werden 21 Tage bei 70 °C und 100 % rel. Feuchte gelagert. Die Haftung wird nach 24 h Regeneration bei Raumklima mit einem manuellen Schältest überprüft: 0 = keine Abschälung; 5 = großflächige Delaminierung

### Kälteschlagzähigkeit:

Die temperierten Prüflinge werden mit einem Bolzen von der lackierten Seite her durchstoßen. Die Arbeitsaufnahme wird gemessen und das Bruchbild hinsichtlich duktilem oder sprödem Versagen charakterisiert. Die angegebenen Werte sind Mittelwerte aus jeweils 5 Messungen.

### UV-Bewitterung:

Die Prüflinge werden in einem XENOTEST 1200 Gerät der Firma Heraeus bewittert (3 luftgekühlte Xenonhochdruckbrenner mit je 4500 W; Quarzinnen- und -außenfilter; 3 Drittelschalen UV-Spezialglas; Gleihlauf, 17 min Trockenphase und 3 min Besprühung mit vollentsalztem Wasser). Die Bestrahlungsintensität betrug 70 W/m² bei 300 - 400 nm, die Schwarztafeltemperatur ca. 38 °C. Die Luftfeuchte betrug > 60 % während der Trockenphase und > 95 % während der Beregnungsphase. Ausgewertet werden das Erscheinungsbild der Klarlacke , umfassend Glanzgrad und Rißbildung (i.O. = in Ordnung; R. = Rißbildung). Untersucht wurden die Klarlacke auf einem gelben Polycarbonat/Polybutylenterephthalt-Blend (Xenoy XD 1573 der Firma General Electric Plastics B.V., Niederlande) und einem grauen Polycarbonat/Polybutylenterephthalat-Blend (Xenoy CL 101 der Firma General Electric Plastics B.V., Niederlande).

### Zusammenfassung der Prüfergebnisse:

Die Klarlacke der Vergleichsbeispiele 3 und 4, die als Bindemittel nur die Polyesterharzlösung enthalten, weisen zwar ein ausgezeichnetes Haftvermögen nach Feuchteeinwirkung und eine hohe Kälteschlagzähigkeit bei tiefen Temperaturen auf. Diese Klarlacke der Vergleichsbeispiele V3 und V4 weisen aber eine unzureichende Resistenz gegenüber Chemikalien, die in den Film diffundieren (z.B. Teerbestandteile) auf. Zudem weisen diese Filme eine unzureichende Witterungsstabilität auf, die auch durch entsprechende Lichtschutzmittel nur unzureichend aufgefangen werden kann.

Klarlacke, die als Bindemittel die Polyesterharzlösung und die Polyacrylatharzlösung enthalten (Beispiele 1 bis 3, Vergleichsbeispiele V1 und V2), zeigen eine signifikant verbesserte Chemikalienresistenz, insbesondere gegenüber kritischen Stoffen, wie z.B. Teer. Überraschenderweise ist jedoch deren Haftvermögen nach Feuchtebelastung deutlich geringer und von der Basizität des eingesetzten Lichtschutzmittels auf HALS-Basis abhängig, wie der Vergleich der Beispiele 1 bis 3 mit den Vergleichsbeispielen V1 und V2 sowie V3 und V4 zeigt. Nur die Verwendung von HALS-Typen mit nichtbasischer Aminfunktion bzw. von HALS-Typen, die nicht zu basischen Aminfunktionen hydrolysierbar sind, gewährleistet die gewünschte Feuchteresistenz.

Überraschenderweise zeigt außerdem der Klarlack des Beispiels 1 unter Verwendung von Lichtschutzmitteln vom HALS-Typ mit OH-Gruppen eine signifikant weiter verbesserte UV-Beständigkeit als der Klarlack des Beispiels 2, bei dem das Lichtschutzmittel vom HALS-Typ nicht einbaubar ist (keine OH-Gruppen), obwohl aufgrund der Fixierung des Lichtschutzmittels vom HALS-Typ am Polymer die für die intermolekulare Reaktion mit Radikalen notwendige Beweglichkeit herabgesetzt ist.

## Patentansprüche

1. Polyurethan-Beschichtungsmittel, enthaltend
a) ein oder mehrere Polyesterharze (A),
b) ein oder mehrere Polyacrylatharze (B),
c) ein oder mehrere Di- und/oder Polyisocyanate (C) mit freien oder blockierten Isocyanatgruppen,
d) ein oder mehrere Lichtschutzmittel (L1) auf Basis eines UV-Absorbers,
e) ein oder mehrere Lichtschutzmittel (L2) auf der Basis sterisch gehinderter Amine und
f) ein oder mehrere organische Lösemittel (D),
**dadurch gekennzeichnet, daß**
1.)der Polyester (A) eine OH-Zahl von 80 bis 200 mg KOH/g und eine Säurezahl < 10 mgKOH/g aufweist,
2.)das Polyacrylatharz (B) eine OH-Zahl von 80 bis 200 mgKOH/g und eine Säurezahl < 20 mgKOH/g aufweist und
3.)das Lichtschutzmittel (L2) auf Basis sterisch gehinderter Amine aminoetherfunktionalisiert ist.

2. Beschichtungsmittel nach Anspruch 1, **dadurch gekennzeichnet, daß** das Polyacrylatharz (B) eine OH-Zahl von 100 bis 150 mgKOH/g und/oder eine Säurezahl von < 10 mgKOH/g und/oder der Polyester (A) eine OH-Zahl von 130 bis 180 mgKOH/g und/oder eine Säurezahl von < 5 mgKOH/g aufweisen.

3. Beschichtungsmittel nach Anspruch 1 oder 2, **dadurch gekennzeichnet, daß** der Polyester aromatische Di- und/oder Polycarbonsäuren, ggf. in Kombination mit Monocarbonsäuren, einkondensiert enthält und/oder das Polyacrylatharz (B) glycidylgruppenhaltige Ester von am α-C-Atom verzweigten Carbonsäuren einpolymerisiert enthält.

4. Beschichtungsmittel nach einem der Ansprüche 1 bis 3, **dadurch gekennzeichnet, daß** es aliphatische und/oder cycloaliphatische Di- und/oder Polyisocyanate enthält.

5. Beschichtungsmittel nach einem der Ansprüche 1 bis 4, **dadurch gekennzeichnet, daß** es Isocyanate auf Basis Isophorondiisocyanat und/oder Hexamethylendiisocyanat und/oder mit den Hydroxylgruppen der Polyesterharze (A) und der Polyacrylatharze (B) unter Ether- und/oder Esterbildung vernetzende Komponenten auf Triazinbasis enthält.

6. Beschichtungsmittel nach einem der Ansprüche 1 bis 5, **dadurch gekennzeichnet, daß** es die Polyesterkomponente (A) und die Polyacrylatkomponente (B) in solchen Mengen enthält, daß die Mischung aus
a) 40 bis 80 Gew.-%, bevorzugt 55 bis 70 Gew.-%, der Komponente (A) und
b) 60 bis 20 Gew.-%, bevorzugt 45 bis 30 Gew.-%, der Komponente (B) besteht,
wobei die Angaben jeweils bezogen sind auf den Festkörper der Harze und wobei die Summe der Gew.%-Angaben der Komponenten (A) und (B) 100 Gew.-% beträgt.

7. Beschichtungsmittel nach einem der Ansprüche 1 bis 6, **dadurch gekennzeichnet, daß** es als Lichtschuttmittel (L2) aminoetherfunktionalisierte, substituierte Piperdin-Derivate und/oder Lichtschutzmittel (L2) mit einem pK_{B}-Wert von mindestens 9,0, bevorzugt von mindestens 9,5, enthält.

8. Beschichtungsmittel nach einem der Ansprüche 1 bis 7, **dadurch gekennzeichnet, daß** das Lichtschutzmittel (L1) und/oder (L2) pro Molekül mindestens eine gegenüber dem Vernetzer reaktive Gruppe, insbesondere mindestens eine OH-Gruppe, aufweist.

9. Beschichtungsmittel nach einem der Ansprüche 1 bis 8, **dadurch gekennzeichnet, daß** das Lichtschutzmittel (L1) vom Benztriazol-Typ und/oder vom Triazin-Typ ist.

10. Beschichtungsmittel nach einem der Ansprüche 1 bis 9, **dadurch gekennzeichnet, daß** es 0,7*0,0185*10⁻³ Mol bis 3,5*0,0185*10⁻³ Mol, bevorzugt 1,4*0,0185* 10⁻³ Mol bis 2,8*0,0185*10⁻³ Mol UV-absorbierende Gruppen des bzw. der Lichtschutzmittel (L1) und 2,0*0,0185*10⁻³ Mol bis 6,0*0,0185*10⁻³ Mol, bevorzugt 3,0*0,0185*10⁻³ Mol bis 5,0*0,0185*10⁻³ Mol sterisch gehinderter Aminogruppen des bzw. der Lichtschutzmittel (L2) enthält, wobei die Mol-Angaben bezogen sind auf 1g Festkörper des Stammlacks.

11. Verfahren zur Herstellung der Beschichtungsmittel nach einem der Ansprüche 1 bis 10, **dadurch gekennzeichnet, daß** sie durch Mischen und ggf. Dispergieren der einzelnen Bestandteile hergestellt werden.

12. Verwendung der Beschichtungsmittel nach einem der Ansprüche 1 bis 10 als Decklack oder als Klarlack.

13. Verwendung nach Anspruch 12 zur Beschichtung von Kunststoffen, insbesondere von Polycarbonat enthaltenden Kunststoffen.

14. Verwendung nach Anspruch 12 oder 13 zur Beschichtung von thermoplastischen, eingefärbten Kunststoffen oder Kunststoff-Blends.

15. Verwendung der Beschichtungsmittel nach einem der Ansprüche 1 bis 10 zur Herstellung von Beschichtungen mit einer guten Haftung auf Kunststoffen nach Feuchtebelastung und gleichzeitig guter Witterungsbeständigkeit und guter Kälteschlagzähigkeit.

## Claims

1. Polyurethane coating composition comprising
a) one or more polyester resins (A),
b) one or more polyacrylate resins (B),
c) one or more di- and/or polyisocyanates (C) having free or blocked isocyanate groups,
d) one or more light stabilizers (L1) based on a UV absorber,
e) one or more light stabilizers (L2) based on sterically hindered amines, and
f) one or more organic solvents (D),
**characterized in that**
1.) the polyester (A) has an OH number of from 80 to 200 mg KOH/g and an acid number < 10 mg KOH/g,
2.) the polyacrylate resin (B) has an OH number of from 80 to 200 mg KOH/g and an acid number < 20 mg KOH/g, and
3.) the light stabilizer (L2) based on sterically hindered amines is amino ether functionalized.

2. Coating composition according to Claim 1, **characterized in that** the polyacrylate resin (B) has an OH number of from 100 to 150 mg KOH/g and/or an acid number of < 10 mg KOH/g and/or the polyester (A) has an OH number of from 130 to 180 mg KOH/g and/or an acid number < 5 mg KOH/g.

3. Coating composition according to Claim 1 or 2, **characterized in that** the polyester comprises in cocondensed form aromatic di- and/or polycarboxylic acids, alone or in combination with monocarboxylic acids, and/or the polyacrylate resin (B) comprises in copolymerized form glycidyl-containing esters of carboxylic acids branched on the α carbon atom.

4. Coating composition according to one of Claims 1 to 3, **characterized in that** it comprises aliphatic and/or cycloaliphatic di- and/or polyisocyanates.

5. Coating composition according to one of Claims 1 to 4, **characterized in that** it comprises isocyanates based on isophorone diisocyanate and/or hexamethylene diisocyanate and/or triazine-based components which crosslink with the hydroxyl groups of the polyester resins (A) and the polyacrylate resins (B) with the formation of ethers and/or esters.

6. Coating composition according to one of Claims 1 to 5, **characterized in that** it comprises the polyester component (A) and the polyacrylate component (B) in amounts such that the mixture consists of
a) from 40 to 80% by weight, preferably from 55 to 70% by weight, of component (A), and
b) from 60 to 20% by weight, preferably from 45 to 30% by weight, of component (B),
the figures being based in each case on the solids content of the resins, and the sum of the percentages by weight of components (A) and (B) being 100% by weight.

7. Coating composition according to one of Claims 1 to 6, **characterized in that** said light stabilizers (L2) comprise amino ether functionalized, substituted piperidine derivatives and/or light stabilizers (L2) having a pK_{b} of at least 9.0, preferably of at least 9.5.

8. Coating composition according to one of Claims 1 to 7, **characterized in that** said light stabilizer (L1) and/or (L2) contains per molecule at least one group which is reactive with respect to the crosslinker, in particular at least one OH group.

9. Coating composition according to one of Claims 1 to 8, **characterized in that** said light stabilizer (L1) is of the benzotriazole type and/or of the triazine type.

10. Coating composition according to one of Claims 1 to 9, **characterized in that** it comprises from 0.7*0.0185*10⁻³ mol to 3.5*0.0185*10⁻³ mol, preferably from 1.4*0.0185*10⁻³ mol to 2.8*0.0185*10⁻³ mol, of UV-absorbing groups of the light stabilizer or stabilizers (L1) and from 2.0*0.0185*10⁻³ mol to 6.0*0.0185*10⁻³ mol, preferably from 3.0*0.0185*10⁻³ mol to 5.0*0.0185*10⁻³ mol, of sterically hindered amino groups of the light stabilizer or stabilizers (L2), the molar amounts being based on 1 g solids of the stock coating material.

11. Processes for preparing the coating compositions according to one of Claims 1 to 10, **characterized in that** they are prepared by mixing and, if desired, dispersing the individual components.

12. Use of the coating compositions according to one of Claims 1 to 10 as a topcoat or as a clearcoat.

13. Use according to Claim 12 to coat plastics, especially plastics comprising polycarbonate.

14. Use according to Claim 12 or 13 to coat coloured thermoplastics or polymer blends.

15. Use of the coating compositions according to one of Claims 1 to 10 to produce coatings having good adhesion to plastics after moisture exposure and at the same time good weathering stability and good low-temperature impact strength.

## Revendications

1. Composition de revêtement de polyuréthanne contenant
a) une ou plusieurs résines polyester (A),
b) une ou plusieurs résines polyacrylate (B),
c) un ou plusieurs di- et/ou polyisocyanates (C) comportant des groupes isocyanate libres ou bloqués,
d) un ou plusieurs photoprotecteurs (L1) à base d'un absorbeur UV,
e) un ou plusieurs photoprotecteurs (L2) à base d'amines à empêchement stérique et
f) un ou plusieurs solvants organiques (D).
**caractérisée en ce que**
1) le polyester (A) présente un indice de groupes OH de 80 à 200 mg de KOH/g et un indice d'acide < 10 mg de KOH/g,
2) la résine polyacrylate (B) présente un indice de groupes OH de 80 à 200 mg de KOH/g et un indice d'acide < 20 mg de KOH/g, et
3) le photoprotecteur (L2) est à base d'amines à empêchement stérique fonctionnalisées par des amino-éthers.

2. Composition de revêtement selon la revendication 1, **caractérisée en ce que** la résine polyacrylate (B) présente un indice de groupes OH de 100 à 150 mg de KOH/g et/ou un indice d'acide < 10 mg de KOH/g, et/ou le polyester (A) présente un indice de groupes OH de 130 à 180 mg de KOH/g et/ou un indice d'acide < 5 mg de KOH/g.

3. Composition de revêtement selon la revendication 1 ou 2, **caractérisée en ce que** le polyester contient condensés des acides di- et/ou polycarboxyliques aromatiques, éventuellement en association avec des acides monocarboxyliques, et/ou la résine polyacrylate (B) contient copolymérisés des esters, contenant des groupes glycidyle, d'acides carboxyliques ramifiés sur l'atome de carbone α.

4. Composition de revêtement selon l'une quelconque des revendications 1 à 3, **caractérisée en ce qu'**elle contient des di- et/ou polyisocyanates aliphatiques et/ou cycloaliphatiques.

5. Composition de revêtement selon l'une quelconque des revendications 1 à 4, **caractérisée en ce qu'**elle contient des isocyanates à base d'isophorone-diisocyanate et/ou d'hexaméthylène-diisocyanate et/ou des composants à base de triazine se réticulant avec les groupes hydroxy des résines polyester (A) et des résines polyacrylate (B) avec formation d'éthers et/ou d'esters.

6. Composition de revêtement selon l'une quelconque des revendications 1 à 5, **caractérisée en ce qu'**elle contient le composant polyester (A) et le composant polyacrylate (B) en quantités telles que le mélange est constitué de
a) de 40 à 80% en poids, de préférence de 55 à 70% en poids du composant (A) et
b) de 60 à 20% en poids, de préférence de 45 à 30% en poids du composant (B),
les données étant chacune par rapport à la matière solide des résines, et la somme des pourcentages en poids des composants (A) et (B) étant 100% en poids.

7. Composition de revêtement selon l'une quelconque des revendications 1 à 6, **caractérisée en ce qu'**elle contient comme photoprotecteur (L2) des dérivés de pipéridine substitués, à fonction aminoéther, et/ou des photoprotecteurs (L2) ayant une valeur pK_{B} d'au moins 9,0, de préférence d'au moins 9,5.

8. Composition de revêtement selon l'une quelconque des revendications 1 à 7, **caractérisée en ce que** le photoprotecteur (L1) et/ou (L2) comporte(nt) par molécule au moins un groupe réactif vis-à-vis de l'agent de réticulation, en particulier au moins un groupe OH.

9. Composition de revêtement selon l'une quelconque des revendications 1 à 8, **caractérisée en ce que** le photoprotecteur (L1) est du type benzotriazole et/ou du type triazine.

10. Composition de revêtement selon l'une quelconque des revendications 1 à 9, **caractérisée en ce qu'**elle contient de 0,7 × 0,0185 × 10⁻³ mole à 3,5 × 0,0185 × 10⁻³ mole, de préférence de 1,4 × 0,0185 × 10⁻³ mole à 2,8 × 0,0185 × 10⁻³ mole de groupes absorbant les rayons UV du ou des photoprotecteurs (L1) et de 2,0 × 0,0185 × 10⁻³ mole à 6,0 × 0,0185 × 10⁻³ mole, de préférence de 3,0 × 0,0185 × 10⁻³ mole à 5,0 × 0,0185 × 10⁻³ mole de groupes amino à empêchement stérique du ou des photoprotecteurs (L2), les données en mole étant par rapport à 1 g de matière solide du vernis de base.

11. Procédé pour la préparation des compositions de revêtement selon l'une quelconque des revendications 1 à 10, **caractérisé en ce qu'**elles sont préparées par mélange et éventuellement dispersion des composants individuels.

12. Utilisation des compositions de revêtement selon l'une quelconque des revendications 1 à 10, en tant que vernis ou peinture de finition.

13. Utilisation selon la revendication 12, pour le revêtement de matières plastiques, en particulier de matières plastiques contenant du polycarbonate.

14. Utilisant selon la revendication 12 ou 13, pour le revêtement de matières synthétiques thermoplastiques colorées ou d'alliages de matières synthétiques thermoplastiques colorés.

15. Utilisation des compositions de revêtement selon l'une quelconque des revendications 1 à 10, pour la production de revêtements ayant une bonne adhérence sur des matières plastiques après exposition à l'humidité et en même temps une bonne résistance aux agents atmosphériques et une bonne résistance au choc à froid.
